# EUROPEAN PATENT SPECIFICATION

(11) **EP 3 191 769 B1**
(45) Date of publication and mention of the grant of the patent: **19.02.2025**
(21) Application number: 15840428.5
(22) Date of filing: 08.09.2015
(51) Int. Cl.: F24F 13/00, F24F 13/32, F24F 5/00, F24F 13/20, F24F 6/00, F24F 1/0003, F24F 1/0057, F24F 1/0068

(54) **AN AIR CONDITIONING SYSTEM AND A WALL UNIT THEREFOR**
KLIMAANLAGE UND WANDEINHEIT DAFÜR
SYSTÈME DE CLIMATISATION ET UNITÉ MURALE ASSOCIÉE

(30) Priority: 08.09.2014 AU 2014903564; 24.02.2015 AU 2015900648
(43) Date of publication of application: 19.07.2017
(73) Proprietor: F.F. Seeley Nominees Pty Ltd., Lonsdale, SA 5160 (AU)
(72) Inventor: MANNIX, Neville Ashley, Lonsdale, South Australia 5160 (AU)
(74) Representative: Elzaburu S.L.P.
(86) International application number: PCT/AU2015/050529
(87) International publication number: WO 2016/037233

(56) References cited:
- CN-Y- 2 380 849
- DE-A1- 1 454 612
- DE-A1- 4 233 529
- GB-A- 2 478 897
- GB-A- 475 454
- JP-A- 2002 168 513
- JP-A- H09 133 402
- US-A- 3 308 634
- US-A1- 2007 125 111
- US-A1- 2013 014 531

## Description

### Technical Field

The present invention relates to an air conditioner. In a particular form the present invention relates to an arrangement including a wall (i.e. indoor) unit for an air conditioner.

### Background of the Invention

An air conditioner of the type commonly referred to as a "window and wall air conditioner" (hereinafter a 'wall air conditioner unit'), is a self-contained air-conditioning unit, so called because it is adapted for mounting in window frames, and through openings provided in exterior walls of a building.

Replacement wall air conditioners units are becoming increasingly difficult to source as split systems and evaporative air coolers are increasingly favoured for their superior efficiency. Moreover, many of the available wall air conditioners units do not meet impending energy efficiency standards.

Another reason that split system air conditioners are favoured over wall air conditioning units is because the separation of the compressor into an externally located unit makes for a substantially quieter air conditioning system. Evaporative air coolers are also substantially quieter as they do not feature a compressor in their design.

Where a wall air conditioner unit was mounted by way of a through hole in an exterior wall of a building, this poses a further problem, as replacement systems don't require the large through hole left by the wall air conditioner.

It is against this background and the problems and difficulties associated therewith that the present invention has been developed.

Certain objects and advantages of the present invention will become apparent from the following description, taken in connection with the accompanying drawings, wherein, by way of illustration and example, an embodiment of the present invention is disclosed.

Any discussion of documents, acts, materials, devices, articles or the like which has been included in the present specification is solely for the purpose of providing a context for the present invention. It is not to be taken as an admission that any or all of these matters form part of the prior art base or were common general knowledge in the field relevant to the present invention as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

In this specification, a statement that an element may be "at least one of" a list of options is to be understood that the element may be any one of the listed options, or may be any combination of two or more of the listed options. Patent document US-2007/125111 -A teaches an air conditioner or "all-in-one" type unit which includes at least a compressor, an indoor unit heat exchanger, an expansion apparatus, an outdoor heat exchanger and a circular pipe. The air conditioner is embedded into a wall body integrally. The outlet of the indoor heat exchanger opens inward the room; the outlet of the outdoor heat exchanger opens outward the room. Patent document JP-2002168513-A discloses an air conditioner mounting apparatus having an installation frame installed by being buried in a wall. There is disposed inside the installation frame a plate frame that includes a body unit anchoring fitment on which a body unit being an air conditioner body is mounted, and an elongated hole extending in the direction where the body unit is taken in and out and is anchored to an internal peripheral surface of the installation frame with a screw inserted into the elongated hole. The plate frame is guided through the elongated hole and is anchored in the state where a front end thereof and a surface of the wall are flushed with each other.

### Summary of the Invention

According to a first aspect, there is provided an arrangement according to claim 1 comprising a wall unit for an air conditioning system, said wall unit being adapted for installation in a through opening provided in an exterior wall of a building which has been vacated by a wall air conditioner unit, wherein internals for the wall unit are substantially housed within the wall's through opening and between interior and exterior surfaces of the wall.

According to a further aspect, there is provided a method of installing a split system air conditioner according to claim 9.

A detailed description of one or more embodiments of the invention is provided below along with accompanying figures that illustrate by way of example the principles of the invention. While the invention is described in connection with such embodiments, it should be understood that the invention is not limited to any embodiment. On the contrary, the scope of the invention is limited only by the appended claims and the invention encompasses numerous alternatives, modifications and equivalents. For the purpose of example, numerous specific details are set forth in the following description in order to provide a thorough understanding of the present invention.

The present invention is practiced according to the claims without some or all of these specific details. For the purpose of clarity, technical material that is known in the technical fields related to the invention has not been described in detail so that the present invention is not unnecessarily obscured.

### Brief Description of the Drawings

An example of the invention will now be described with reference to the accompanying drawings, in which:
Figure 1 illustrates both a cross-sectional view through an external wall of a building, and a schematic of a wall air conditioner unit mounted in a through opening in the wall;
Figure 2 illustrates both a cross-sectional view through an external wall of a building, and a schematic of a split system air conditioner comprising a wall unit mounted in a through opening in the wall;
Figure 3 is a schematic cross-sectional view of the wall unit from the split system air conditioner of Figure 2;
Figure 4 is a front view of the wall unit of Figure 3;
Figure 5 is a schematic rear view of the wall unit of Figure 3;
Figure 6 illustrates both a cross-sectional view through an external wall of a building, and a schematic of a split system air conditioner according to a further embodiment, comprising a wall unit mounted in a through opening in the wall;
Figure 7 is a schematic cross-sectional view of the wall unit from the split system air conditioner of Figure 6;
Figure 8 is a schematic front view of the wall unit of Figure 7;
Figure 9 illustrates both a cross-sectional view through an external wall of a building, and a schematic of an evaporative air cooler comprising a wall unit mounted in a through opening in the wall;
Figure 10 is a schematic cross-sectional view of the wall unit from the evaporative air cooler of Figure 9;
Figure 11 is an isometric view of the wall unit from the evaporative air cooler of Figure 9;

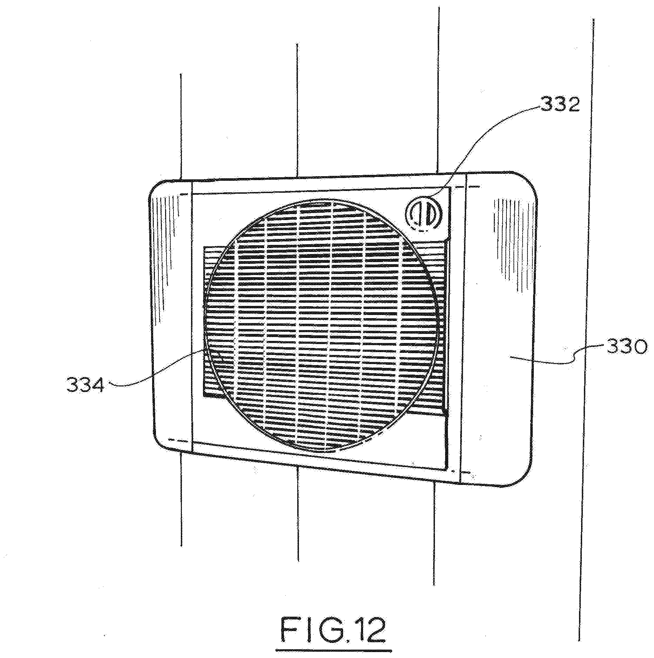

Figure 12 is a front view of the wall unit of Figure 9; and

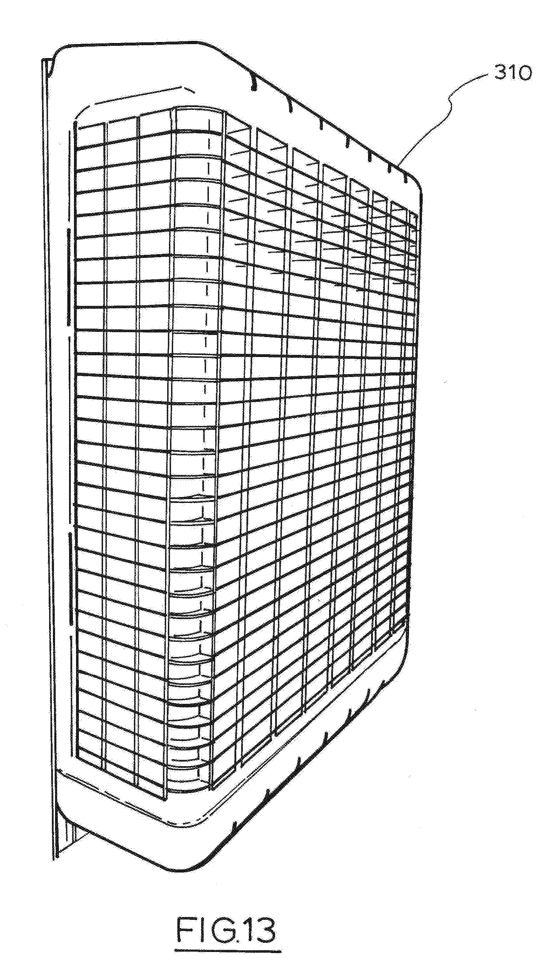

Figure 13 is a rear view of the wall unit of Figure 9.

### Description of the Preferred Embodiments

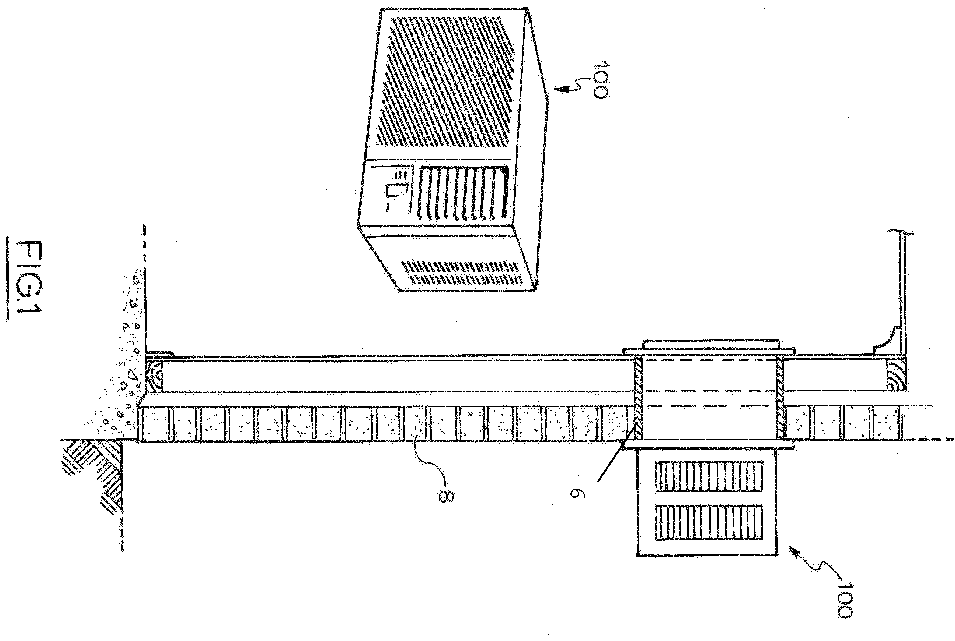

Referring to Figure 1, where there is shown a wall air conditioner unit 100 of the prior art, installed in a through opening 6 provided in an exterior wall 8 of a building, and having significant exterior overhang.

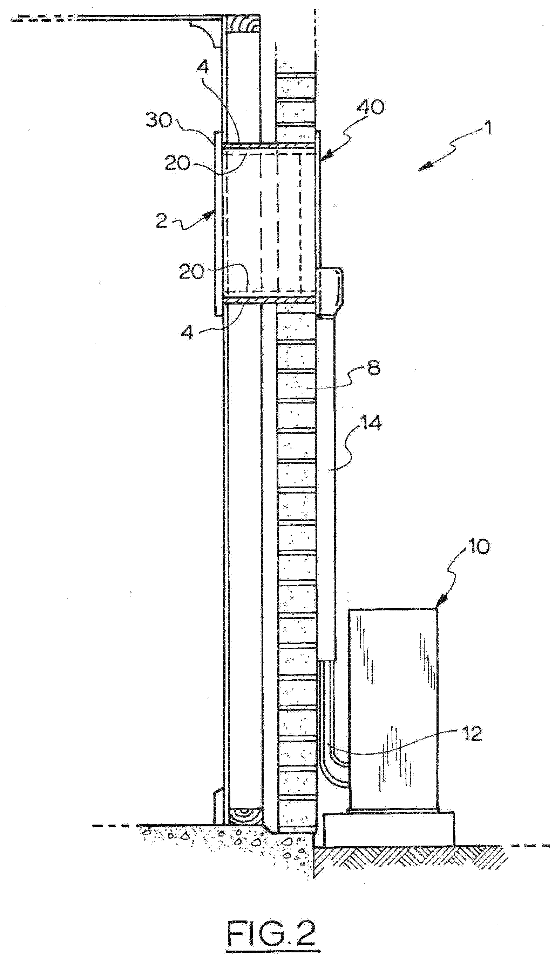

Referring now to Figure 2, where there is shown a split system air conditioner 1 according to the present invention, the split system air conditioner 1 comprising a wall unit 2 installed via a mounting 4 in the through opening 6 vacated by the wall air conditioner unit 100 of Figure 1. The split system air conditioner 1 further comprises an outdoor unit 10.

The mounting 4 comprises a bottom 12, a top 14, and a pair of opposing sides 16 cooperatively defining a passageway 18 through the mounting 4 which is of a rectilinear cross-sectional shape.

The mounting 4 is sized to nest in and substantially fill the through opening 6 provided in the exterior wall 8 of the building which was vacated by the wall air conditioner 100. The mounting 4 is secured to the wall using fasteners, which is driven through at least the bottom 12 of the mounting 4 and into a frame for the through opening 6.

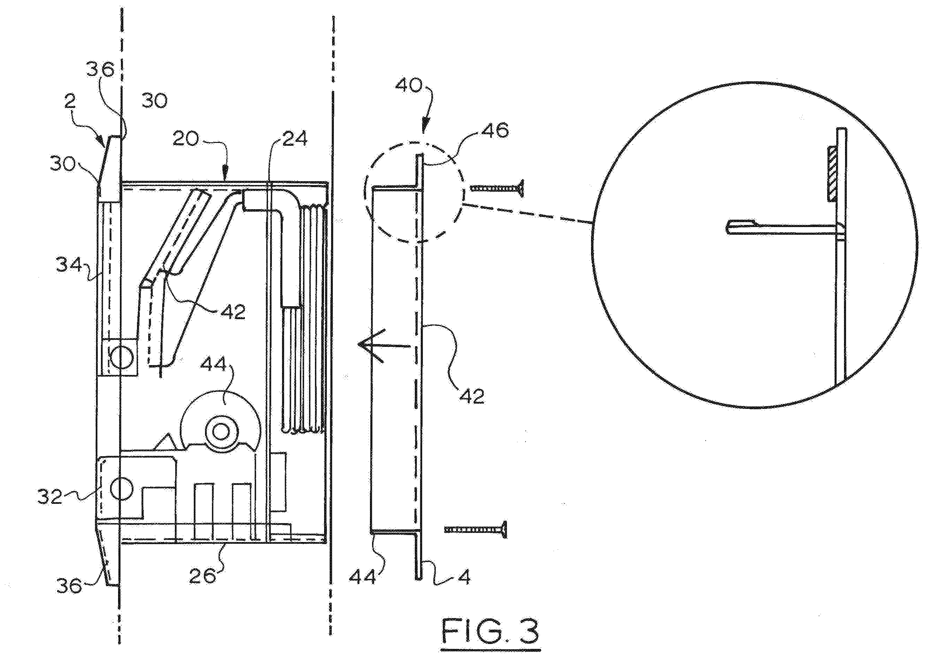

The wall unit 2 comprises a generally cuboid housing 20, an aesthetically pleasing front 30, a pair of sides 22, a top 24, a bottom 26, and a removable back 40. With reference to Figure 3, it is seen that the housing 20 houses at least an indoor heat exchanger 42 and a fan 44 for circulating air over surfaces of the indoor heat exchanger 42. The front 30 comprises a front panel comprising an air intake 32, and an air outlet 34 for the conditioned air, both of which are covered by a pivoting louver therefor. The front panel 30 further comprises an outwardly extending perimeter flange 36.

The housing 20 for the wall unit 2 is sized to nest in the mounting 4 with an easy sliding fit. With the back 40 (which comprises a back plate in this embodiment) removed, the wall unit 2 is inserted into the mounting 4 and slid until the permitter flange 36 abuts, and is substantially flush with, an interior surface of the wall 8.

In use, the front's 30 outwardly extending perimeter flange 36 extends adjacent to an interior surface of the wall 8 (as illustrated in Figure 2) and conceals any edges of the through opening 6 in the interior surface of the wall 8.

The back 40 comprises a back plate and a collar for insertion into housing 20 of the wall unit 2. The back plate 40 comprises an outwardly extending perimeter flange 46.

Once the wall unit 2 has been installed in the mounting 4, the back 40 is refitted so that the back plate 40 abuts, and is substantially flush with, an exterior surface of the exterior wall 8 (as illustrated in Figure 2) so that this conceals any edges of the through opening 6 in the exterior surface of the wall 8, and then secured with respect to the housing 20 via screws, thereby securing the wall unit 2 in the through opening 6.

The back plate 40 comprises apertures through which the refrigerant lines 13 (and power lines) is passed and connected to the outdoor unit 10.

The outdoor unit 10 is operatively associated with the wall mounted unit 2 by way of cabling and refrigerant lines 13 extending from the outdoor unit 10 to the back 40 (i.e. external side) of the wall unit 2, where these cables and refrigerant lines 13 are covered with a vanity cover. The outdoor unit 10 comprises a housing for an outdoor heat exchanger, a fan for circulating air over surfaces of the outdoor heat exchanger, and a system refrigerant compressor.

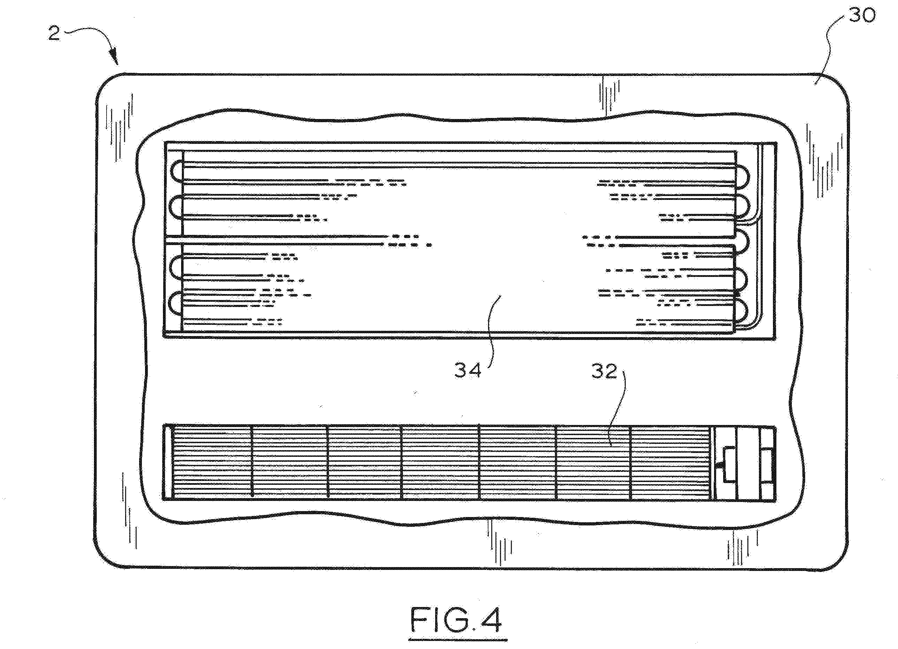

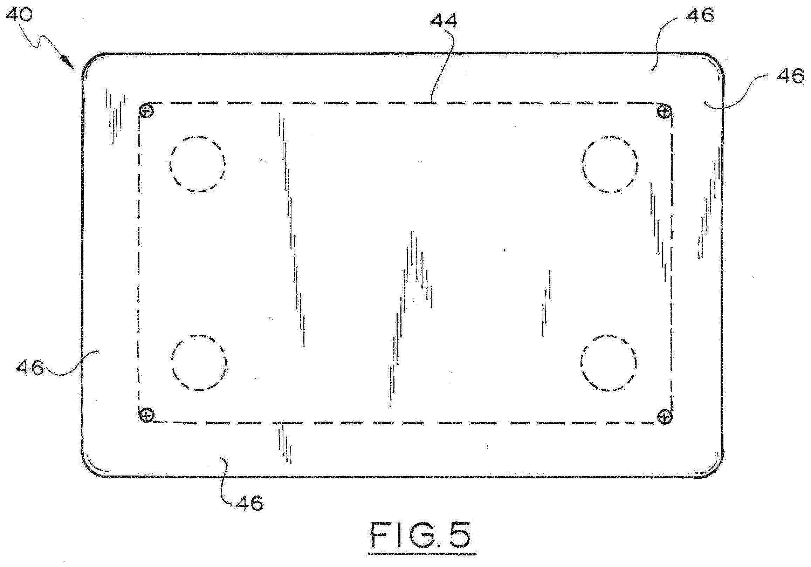

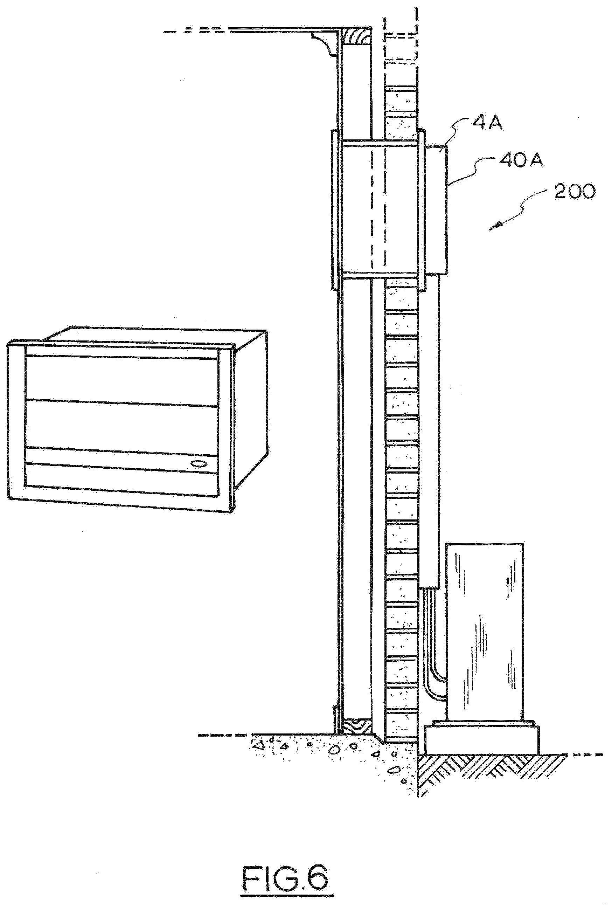

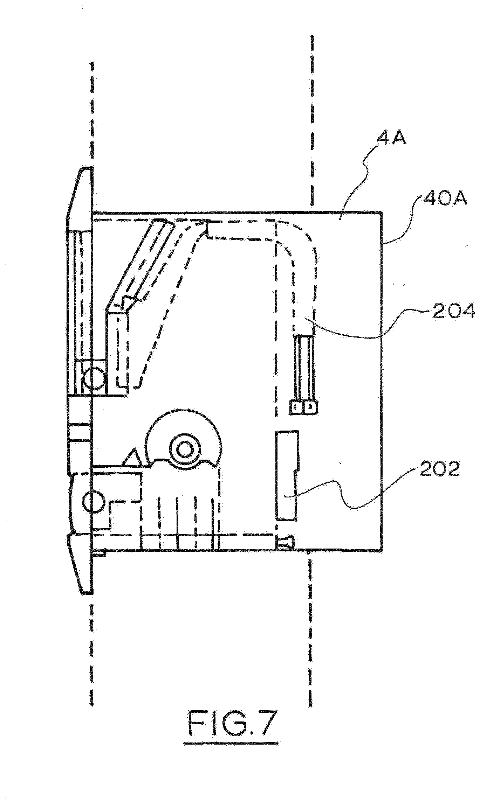

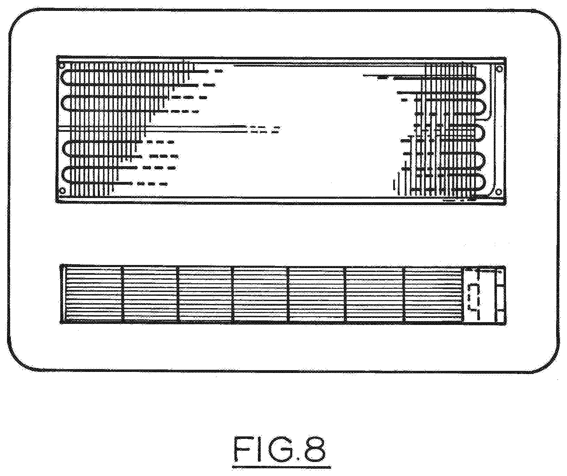

Referring now to Figures 6 through 8, which illustrate an additional embodiment of the invention. Since most of the parts of the split system air conditioner 200 shown in Figures 6 through 8 are identical to corresponding parts shown in the split system air conditioner 1 of Figures 2 through 5, they are denoted by the same reference numerals and will not be described again in detail.

Split system air conditioner 200 differs from split system air conditioner 1 of Figures 2 through 5 in that it comprises a mounting 4A which will project from the exterior surface of the exterior wall. Split system air conditioner 200 further comprises a back plate 40A which is removably securable to the mounting 4A. The mounting 4A surrounds connections 202 and 204 for the cabling and refrigerant lines 13 respectively. These connections 202 and 204 are accessible by removal of the back plate 40A, and once connection is completed, the back plate 40A is secured to the mounting 4A to conceal the connections 202 and 204.

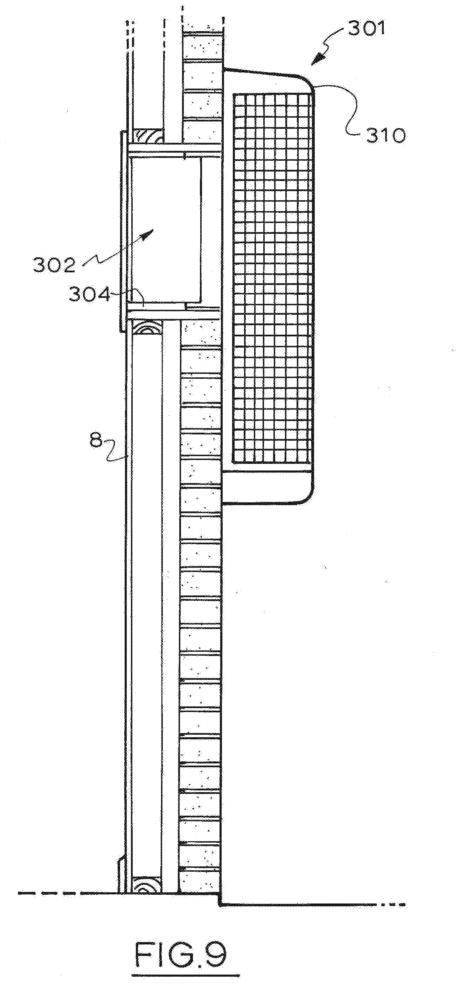

Referring to Figure 9, where there is shown an evaporative air cooler 301, the evaporative air cooler 301 comprising a wall unit 302 installed via a mounting 304 in the through opening 6 vacated by the wall air conditioner unit 100 of Figure 1. The evaporative air cooler 301 further comprises an exterior section 310 which is removably mounted on the back of the wall unit 302.

The mounting 304 comprises a bottom 312, a top 314 and opposing sides 316 cooperatively defining a passageway 318 through the mounting 304 which is of a rectilinear cross-sectional shape.

The mounting 304 is sized to nest in and substantially fill through opening 6 provided in the exterior wall 8 of the building which was vacated by the wall air conditioner 100. The mounting 304 is secured to the wall using fasteners, which is driven through at least the bottom 312 of the mounting 304 and into a frame for the through opening 6.

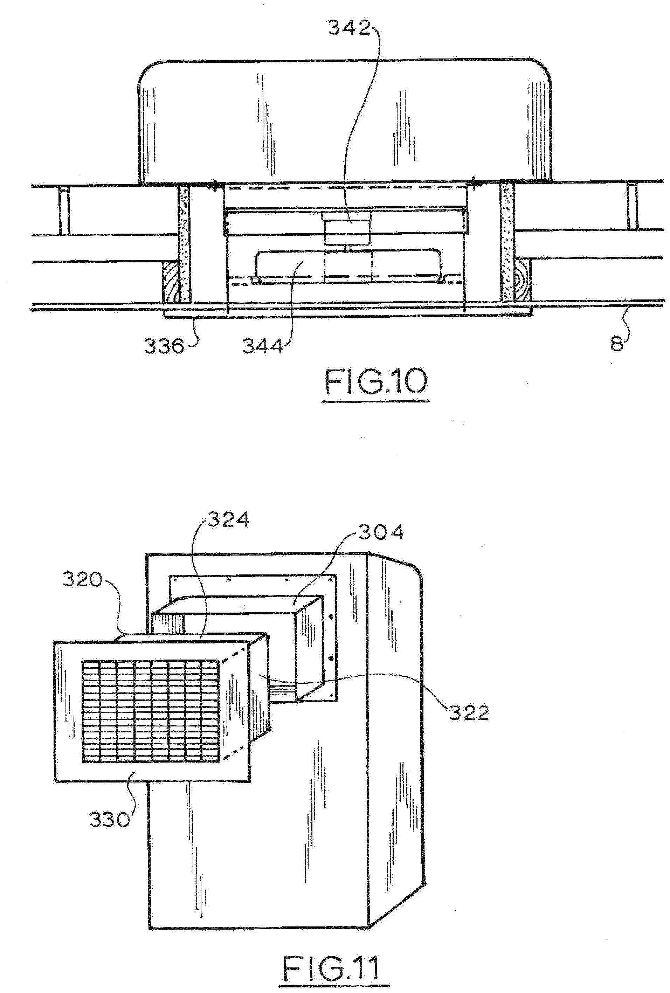

The wall unit 302 comprises a generally cuboid housing 320, an aesthetically pleasing front 330, a pair of sides 322, a top 324, a bottom 326, and back 340. With reference to Figure 10, it is seen that the housing 320 houses at last an axial motor 342 for driving a fan 344 for circulating air. The front 330 comprises a front panel comprising an air outlet 334 for the cooled air and a fan speed control 332. The front panel 330 further comprises an outwardly extending perimeter flange 336.

The housing 320 for the wall unit 302 is sized to next in the mounting 304 with an easy sliding fit. The wall unit 302 is inserted into the mounting 304 and slid until the perimeter flange 336 abuts, and is substantially flush with, an interior surface of the wall 8.

In use, the front's 30 outwardly extending perimeter flange 36 extends adjacent to an interior surface of the wall 8 (as illustrated in Figure 10) so that this conceals any edges of the through opening 6 in the exterior surface of the wall 8, and then secured with respect to the housing 320 via screws, thereby securing the wall unit 302 in the through opening 6.

The back 340 of the wall unit 302 is configured to engage with the exterior section 310 of the evaporative air cooler 301. The exterior section 310 form factor is larger than that of the wall unit 302.

Once the wall unit 302 has been installed in the mounting 304, the exterior section 310 is fitted so that it abuts and projects to a minimal extent from, an exterior surface of the wall 8 (as illustrated in Figure 10) so that this conceals any edges of the through opening 6 in the exterior surface of the wall 8.

The exterior section 310 is operatively associated with the wall unit 302 by way of ducting. The exterior section 310 comprises a housing for at least a water distribution system, cooling pad and associated plumbing and ducting.

It will be apparent from all of the above that the present invention provides an air conditioning system and a wall unit therefore, which solve the problem of how to fill the opening vacated by a wall air conditioner unit, by replacing it with a system which is aesthetically pleasing and easy to retro fit, which provides at least cooling to current and proposed MEPS (Aust) and EER (USA) legislated energy efficiency standards, which operates with reduced noise and power (running) costs.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

It will be appreciated by those skilled in the art that the invention is not restricted in its use to the particular application described. Neither is the present invention restricted in its preferred embodiment with regard to the particular elements and/or features described or depicted herein. It will be appreciated that the invention is not limited to the embodiment or embodiments disclosed, but is capable of numerous rearrangements, modifications and substitutions without departing from the scope of the invention as set forth and defined by the following claims.

Some embodiments of the invention may utilise 3D printing for construction of the device. Accordingly, in some embodiments the present invention may reside in a digital blueprint comprising a digital file in a format configured for use with rapid prototyping and computer aided design (CAD) and/or manufacturing, such as being in the STL (stereolithography) file format. Such digital blueprint files, whether produced by performing a three dimensional scan of an embodiment of the invention, or produced by a CAD development software tool, or the like, are within the scope of the present invention.

## Claims

1. An arrangement including a split system air conditioner (1) and an exterior wall (8) of a building, wherein the exterior wall (8) includes a through opening (6) vacated by a wall air conditioner unit, the split system air conditioner (1) including a wall unit (2) and a mounting (4) for the wall unit (2), wherein the wall unit is installed via the mounting (4) in the trough opening (6), wherein the mounting (4) comprises a bottom, a top, and a pair of opposing sides cooperatively defining a passageway through the mounting (4) which is of a rectilinear cross-sectional shape and an outdoor unit (10), the wall unit (2) includes a cuboid housing (20) with an aesthetic pleasing front (30), a pair of sides, a top (24), a bottom (26), and a removable back (40), wherein the front (30) comprises a front panel comprising an air intake (32) and an air outlet (34), both of which are covered by a pivoting louver therefor, and between which are located an indoor heat exchanger (42) and a fan (44) for circulating air over the surfaces of the indoor heat exchanger (42) and between the air intake (32) and the air outlet (34) that are both located at the front (30) of the housing (20), and an outwardly extending perimeter flange (36), the mounting (4) being adapted both for insertion in the through opening (6), and for supporting the wall unit (2), the arrangement being **characterized in that** the housing (20) of the wall unit (2) is sized to nest in the mounting (4) with an easy sliding fit with the front (30) and back (40) of the wall unit (2) fitted substantially flush with respective interior surfaces of the exterior wall (8), and that the outdoor unit (10) is located externally of the exterior wall (8) and is operatively associated with the wall unit (2) via at least cabling and refrigerant lines (13).

2. The arrangement according to claim 1, wherein the outwardly directed perimeter flange (36), in use, extends adjacent to the interior surface of the exterior wall and conceals any edges of the through opening therein.

3. The arrangement according to claim 2, wherein the back (40) is adapted for engagement with, and positioning relative to, a remainder of the wall unit (2), so that a distance between the front (30) and the back (40) of the wall unit (2) is adjustable to match a thickness of the exterior wall between the interior and exterior surfaces thereof.

4. The arrangement according to either claim 2 or claim 3, wherein the back (40) includes an outwardly directed perimeter flange (46), which in use, extends adjacent to the exterior surface of the exterior wall (8) and conceals any edges of the through opening therein.

5. The arrangement according to claim 4, wherein the back (40) includes a collar (44) for insertion into the housing (20).

6. The arrangement according to claim 5, wherein the back (40) includes a back plate (42) including an aperture for the refrigerant line (13).

7. The arrangement according to any one of the previous claims, further including a cover (14) arranged to cover the refrigerant line (13) at the exterior surface between the back (40) and the outdoor unit (10).

8. The arrangement according to any one of the previous claims, wherein the outdoor unit (10) includes an outdoor heat exchanger and a compressor.

9. A method of installing a split system air conditioner (1) relative to an external wall (8) of a building in an arrangement according to claim 1, the split system air conditioner (1) including a wall unit (2) and an outdoor unit (10), the method including:
• Removing an existing wall air conditioner unit from an external wall (8) to reveal a through opening (6) extending between an exterior surface and an interior surface of the external wall (8);
• Fitting a mounting (4) to the through opening,
• Nesting a housing (20) of the wall unit (2) in the mounting with the front (30) and back (40) of the wall unit (2) fitted substantially flush with the respective interior and exterior surfaces of the exterior wall (8);
• Locating the outdoor unit (10) externally of the external wall (8);
• Connecting at least cabling and refrigerant lines (13) between the wall unit (2) and the outdoor unit (10) so as to operatively associate the wall unit (2) and the outdoor unit (10).

10. The method according to claim 9, wherein the method includes the step of:
• slidably fitting the housing (20) of the wall unit (2) into a passageway of the mounting (4).

## Patentansprüche

1. Anordnung, die eine Split-System-Klimaanlage (1) und eine Außenwand (8) eines Gebäudes umfasst, wobei die Außenwand (8) eine Durchgangsöffnung (6) umfasst, die von einer Wandklimaanlage freigelegt wird, wobei die Split-System-Klimaanlage (1) eine Wandeinheit (2) und eine Halterung (4) für die Wandeinheit (2) umfasst, wobei die Wandeinheit an der Halterung (4) in der Durchgangsöffnung (6) installiert ist, wobei die Halterung (4) eine Unterseite, eine Oberseite und ein Paar gegenüberliegender Seiten umfasst, die zusammenwirkend einen Durchgang durch die Halterung (4) definieren, der eine geradlinige Querschnittsform und eine Außeneinheit (10) aufweist, wobei die Wandeinheit (2) ein quaderförmiges Gehäuse (20) mit einer ästhetisch ansprechenden Vorderseite (30), einem Seitenpaar, einer Oberseite (24), einer Unterseite (26) und einer abnehmbaren Rückseite (40) umfasst, wobei die Vorderseite (30) eine Frontplatte umfasst, die einen Lufteinlass (32) und einen Luftauslass (34) umfasst, die beide durch eine Schwenkklappe dafür abgedeckt sind und zwischen denen sich ein Innenwärmetauscher (42) und ein Lüfter (44) befinden, um Luft über die Oberflächen des Innenwärmetauschers (42) und zwischen dem Lufteinlass (32) und dem Luftauslass, die sich beide an der Vorderseite (30) des Gehäuses (20) befinden, und einem sich nach außen erstreckenden Umfangsflansch (36) zu zirkulieren, wobei die Halterung (4) die sowohl für das Einsetzen in die Durchgangsöffnung (6) als auch für das Tragen der Wandeinheit (2) geeignet ist, wobei die Anordnung **dadurch gekennzeichnet ist, dass** das Gehäuse (20) der Wandeinheit (2) so bemessen ist, dass es sich leicht verschiebbar in die Halterung (4) einfügt, wobei die Vorderseite (30) und die Rückseite (40) der Wandeinheit (2) im Wesentlichen bündig mit den jeweiligen Innenflächen der Außenwand (8) abschließen, und dass sich die Außeneinheit (10) außen an der Außenwand (8) befindet und betriebsfähig mit der Wandeinheit (2) über mindestens Verkabelungs- und Kältemittelleitungen (13) verbunden ist.

2. Anordnung nach Anspruch 1, wobei sich der nach außen gerichtete Umfangsflansch (36) im Gebrauch angrenzend an die Innenfläche der Außenwand erstreckt und alle Kanten der Durchgangsöffnung darin verbirgt.

3. Anordnung nach Anspruch 2, wobei die Rückseite (40) zum Eingriff mit und zur Positionierung relativ zu einem Rest der Wandeinheit (2) angepasst ist, so dass ein Abstand zwischen der Vorderseite (30) und der Rückseite (40) der Wandeinheit (2) einstellbar ist, um einer Dicke der Außenwand zwischen der Innen- und Außenfläche zu entsprechen.

4. Anordnung nach Anspruch 2 oder Anspruch 3, wobei die Rückseite (40) einen nach außen gerichteten Umfangsflansch (46) beinhaltet, der sich im Gebrauch angrenzend an die Außenfläche der Außenwand (8) erstreckt und alle Kanten der Durchgangsöffnung darin verbirgt.

5. Anordnung nach Anspruch 4, wobei die Rückseite (40) einen Kragen (44) zum Einsetzen in das Gehäuse (20) einschließt.

6. Anordnung nach Anspruch 5, wobei die Rückseite (40) eine Rückplatte (42) beinhaltet, die eine Öffnung für die Kältemittelleitung (13) einschließt.

7. Anordnung nach einem der vorstehenden Ansprüche, ferner umfassend eine Abdeckung (14), die angeordnet ist, um die Kältemittelleitung (13) an der Außenfläche zwischen der Rückseite (40) und der Außeneinheit (10) abzudecken.

8. Anordnung nach einem der vorstehenden Ansprüche, wobei die Außeneinheit (10) einen Außenwärmetauscher und einen Kompressor einschließt.

9. Verfahren zum Installieren einer Split-System-Klimaanlage (1) an einer Außenwand (8) eines Gebäudes in einer Anordnung nach Anspruch 1, wobei die Split-System-Klimaanlage (1) eine Wandeinheit (2) und eine Außeneinheit (10) einschließt, wobei das Verfahren Folgendes beinhaltet:
• Entfernen einer vorhandenen Wandklimaanlage von einer Außenwand (8), um eine Durchgangsöffnung (6) freizulegen, die sich zwischen einer Außenfläche und einer Innenfläche der Außenwand (8) erstreckt;
• Anbringen einer Halterung (4) an der Durchgangsöffnung,
• Einsetzen eines Gehäuses (20) der Wandeinheit (2) in die Halterung, wobei die Vorderseite (30) und die Rückseite (40) der Wandeinheit (2) im Wesentlichen bündig mit den jeweiligen Innen- und Außenflächen der Außenwand (8) sind;
• Anordnen der Außeneinheit (10) außen an der Außenwand (8);
• Verbinden von mindestens Verkabelungs- und Kältemittelleitungen (13) zwischen der Wandeinheit (2) und der Außeneinheit (10), um die Wandeinheit (2) und die Außeneinheit (10) operativ zu verbinden.

10. Verfahren nach Anspruch 9, wobei das Verfahren ferner umfasst:
• Verschiebbares Montieren des Gehäuses (20) der Wandeinheit (2) in einem Durchgang der Halterung (4).

## Revendications

1. Agencement comprenant un climatiseur à système divisé (1) et un mur extérieur (8) d'un bâtiment, dans lequel le mur extérieur (8) comprend une ouverture traversante (6) libérée par une unité de climatiseur murale, le climatiseur à système divisé (1) comprenant une unité murale (2) et un support (4) pour l'unité murale (2), dans lequel l'unité murale est installée par l'intermédiaire du support (4) dans l'ouverture traversante (6), dans lequel le support (4) comprend un fond, un dessus et une paire de côtés opposés définissant conjointement un passage à travers le support (4) qui est en forme de section transversale rectiligne et une unité extérieure (10), l'unité murale (2) comprend un boîtier parallélépipédique (20) ayant un avant esthétiquement agréable (30), une paire de côtés, un dessus (24), un fond (26) et un arrière amovible (40), dans lequel l'avant (30) comprend un panneau avant comprenant une entrée d'air (32) et une sortie d'air (34), qui sont toutes deux couvertes par une persienne pivotante, et entre lesquelles sont situés un échangeur de chaleur intérieur (42) et un ventilateur (44) pour faire circuler de l'air sur les surfaces de l'échangeur de chaleur intérieur (42) et entre l'entrée d'air (32) et la sortie d'air qui sont toutes deux situées à l'avant (30) du boîtier (20), et une bride périphérique (36) s'étendant vers l'extérieur, le support (4) étant conçu à la fois pour être inséré dans l'ouverture traversante (6) et pour supporter l'unité murale (2), l'agencement étant **caractérisé en ce que** le boîtier (20) de l'unité murale (2) est dimensionné pour s'emboîter dans le support (4) avec un ajustement coulissant facile avec l'avant (30) et l'arrière (40) de l'unité murale (2) montés sensiblement au même niveau que la surface intérieure respective du mur extérieur (8), et **en ce que** l'unité extérieure (10) est située à l'extérieur du mur extérieur (8) et est fonctionnellement associée à l'unité murale (2) par l'intermédiaire d'au moins des câbles et des conduites de réfrigérant (13).

2. Agencement selon la revendication 1, dans lequel la bride périphérique (36) dirigée vers l'extérieur, en service, s'étend de manière adjacente à la surface intérieure du mur extérieur et dissimule tous les bords de l'ouverture traversante de celui-ci.

3. Agencement selon la revendication 2, dans lequel l'arrière (40) est adapté pour s'engager avec, et se positionner par rapport à, un reste de l'unité murale (2), de sorte qu'une distance entre l'avant (30) et l'arrière (40) de l'unité murale (2) peut être ajustée de sorte à correspondre à une épaisseur du mur extérieur entre les surfaces intérieure et extérieure de celui-ci.

4. Agencement selon la revendication 2 ou la revendication 3, dans lequel l'arrière (40) comprend une bride périphérique (46) dirigée vers l'extérieur qui, en service, s'étend de manière adjacente à la surface extérieure du mur extérieur (8) et dissimule tous les bords de l'ouverture traversante de celui-ci.

5. Agencement selon la revendication 4, dans lequel l'arrière (40) comprend un collier (44) destiné à être inséré dans le boîtier (20).

6. Agencement selon la revendication 5, dans lequel l'arrière (40) comprend une plaque arrière (42) comprenant une ouverture pour la conduite de réfrigérant (13).

7. Agencement selon l'une quelconque des revendications précédentes, comprenant en outre un couvercle (14) agencé pour couvrir la conduite de réfrigérant (13) au niveau de la surface extérieure entre l'arrière (40) et l'unité extérieure (10).

8. Agencement selon l'une quelconque des revendications précédentes, dans lequel l'unité extérieure (10) comprend un échangeur de chaleur extérieur et un compresseur.

9. Procédé d'installation d'un climatiseur à système divisé (1) par rapport à un mur extérieur (8) d'un bâtiment dans un agencement selon la revendication 1, le climatiseur à système divisé (1) comprenant une unité murale (2) et une unité extérieure (10), le procédé consistant à :
• Retirer une unité de climatiseur murale existante d'un mur extérieur (8) pour révéler une ouverture traversante (6) s'étendant entre une surface extérieure et une surface intérieure du mur extérieur (8) ;
• Monter un support (4) sur l'ouverture traversante,
• Emboîter un boîtier (20) de l'unité murale (2) dans le support avec l'avant (30) et l'arrière (40) de l'unité murale (2) installés sensiblement au même niveau que les surfaces intérieure et extérieure respectives du mur extérieur (8) ;
• Localiser l'unité extérieure (10) à l'extérieur du mur extérieur (8) ;
• Connecter au moins des câbles et conduites de réfrigérant (13) entre l'unité murale (2) et l'unité extérieure (10) de manière à associer fonctionnellement l'unité murale (2) et l'unité extérieure (10).

10. Procédé selon la revendication 9, dans lequel le procédé consiste en outre à :
• monter de manière coulissante le boîtier (20) de l'unité murale (2) dans un passage du support (4)
